# EUROPEAN PATENT SPECIFICATION

(11) **EP 1 839 721 B1**
(45) Date of publication and mention of the grant of the patent: **04.08.2010**
(21) Application number: 07104142.0
(22) Date of filing: 14.03.2007
(51) Int. Cl.: B01D 45/12, B04C 5/103, B04C 5/13, B04C 5/181

(54) **Gas-liquid separator**
Gas-Flüssigkeits-Separator
Séparateur gaz/liquide

(30) Priority: 29.03.2006 JP 2006091895
(43) Date of publication of application: 03.10.2007
(73) Proprietor: Toyota Boshoku Kabushiki Kaisha, Kariya-shi, Aichi-ken 448-8651 (JP)
(72) Inventor: KOJIMA, Hirotsugu, Kariya-shi, Aichi 448-8651 (JP); HAGIWARA, Shinichi, Kariya-shi, Aichi 448-8651 (JP)
(74) Representative: TBK-Patent

(56) References cited:
- US-A- 2 222 930
- US-A- 2 295 101
- US-A- 2 846 024
- US-A- 3 109 723

## Description

### [Field of the Invention]

The present invention relates to a gas-liquid separator, more specifically, an easily machined vertical gas-liquid separator that can inhibit an unseparated gas-liquid mixture from a liquid discharge outlet from flowing into an exhaust pipe and that can discharge the separated liquid smoothly.

### [Background Art]

A gas-liquid separator has been conventionally known that separates a blow-by gas centrifugally, which leaks from an automotive combustion chamber, into a gas and an oil. (Refer to JP-A 2003-254031, for example.)
JP-A 2003-254031 discloses a vertical gas-liquid separator that comprises a roughly cylindrical cyclone case 14 where a gas introduction inlet is formed at an upper side and an oil discharge outlet is formed at a lower end, and a gas discharge pipe 32 which has a gas pipe 40 that is fixed to the upper side of the case and extends vertically into the interior of the case. In this gas-liquid separator, a blow-by gas introduced from the gas introduction inlet along a tangential line forms a rotating flow in the cyclone case 14 to separate a gas and an oil centrifugally, and the separated gas is exhausted from the gas pipe 40, while the separated oil is discharged from the oil discharge outlet.

However, when the conventional gas-liquid separator described above is used, the blow-by gas is sometimes drawn in from both the gas introduction inlet and the oil discharge outlet during being drawn in. In this case, the blow-by gas from the oil discharge outlet tends to be drawn directly into the gas pipe, so that the separation efficiency cannot be increased sufficiently.

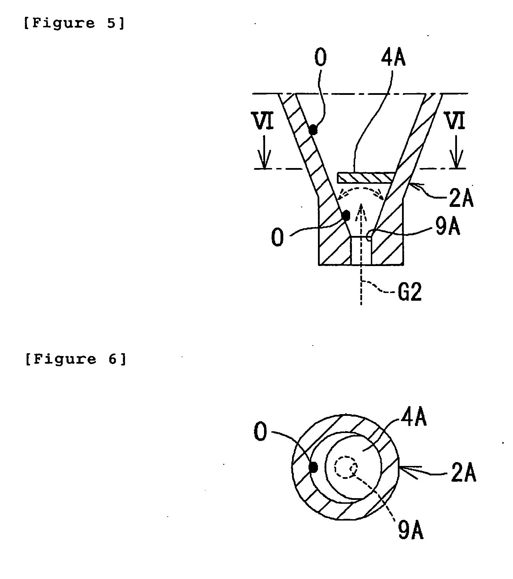

Additionally, a conventional gas-liquid separator, for example, that is a horizontally disposed type and comprises a back flow prevention barrier 23 which prevents back flow of et blow-by gas from a liquid discharge hole 22 is disclosed in JP-A 2003-144825.
Here, it can be thought that the back flow prevention barrier in JP-A 2003-144825 is used in a gas-liquid separator that is vertically disposed.
JP-A 2003-144825 discloses a back flow prevention barrier in a housing 12 (a case member), however, if the back flow prevention barrier is simply used in the gas-liquid separator that is vertically disposed, a problem occurs as described below. Specifically, if the back flow prevention barrier 4A is installed such that it extends horizontally in the case member 2A as shown in Figures. 5 and 6, a gap between an outer peripheral surface of the back flow prevention barrier 4A and an inside surface of the case member is comparatively narrow and not uniform in the circumferential direction, so it is difficult to discharge the separated oil O smoothly via the gap. Moreover, since the back flow prevention barrier 4A is installed at partway on a tapered face of the case member, it is difficult to integral-form the case member 2A and the back flow prevention barrier 4A simultaneously in the case member 2A is formed by die casting.
Furthermore, vertical-type gas-liquid separators according to the preamble of claim 1 are known from US-A-3 109 723 and US-A-2 222 930.

### [Disclosure of the Invention]

### [Problems to be solved by the Invention]

An object of the present invention is to provide an easily machined vertical gas-liquid separator that can inhibit an unseparated gas-liquid mixture from a liquid discharge outlet from flowing into an exhaust pipe and that can discharge the separated liquid smoothly.

### [Means for solving problem]

The above object is solved with a vertical-type gas-liquid separator having the features of claim 1.

### [Effect of the Invention]

According to the gas-liquid separator of the present invention, the gas-liquid mixture introduced forms a rotating flow in the case member to centrifugally separate into a gas and a liquid. Thereby the separated liquid is discharged to the outside from the liquid discharge outlet, and the separated gas is exhausted to the outside from the exhaust pipe. Since the obstructing member is connected to the exhaust member by the support rib to position in the vicinity of the liquid discharge outlet, the flow of the gas-liquid mixture from the liquid discharge outlet toward the exhaust pipe by the obstructing member is obstructed to inhibit the direct drawing of the gas-liquid mixture into the exhaust pipe. Thus the separation efficiency can be improved. In addition, since a gap that is sufficiently wide and is uniform in the circumferential direction is formed between an outer peripheral surface of the obstructing member and an inside surface of the case member, the separated liquid can be smoothly discharged from the liquid discharge outlet via the gap. Moreover, in the case of forming the exhaust member by die casting, the obstructing member can be integral-formed simultaneously with the exhaust member (exhaust pipe), being superior in machinability.
Additionally, in the case the obstructing member is connected to a lower end of the exhaust pipe with the support rib and is disposed such that it faces the liquid discharge outlet and has a size such that it covers the liquid discharge outlet, the flow of the gas-liquid mixture from the liquid discharge outlet toward the exhaust pipe is more reliably obstructed by a facing surface of the obstructing member.
Moreover, in the case the face of the obstructing member that faces the liquid discharge outlet is a flat surface or a concave surface (a surface to be concave toward an upper side), the flow of the gas-liquid mixture from the liquid discharge outlet toward the exhaust pipe is more reliably obstructed by the flat surface or the concave surface.
Additionally, in the case the each support rib extends from a lower end of the exhaust pipe to a lower end of the support rib while inclining to an axial center of the exhaust pipe, a rotating flow of the gas-liquid mixture that is introduced into the case member is formed more smoothly.
Additionally, in the case the support rib has a helical shape that is aligned to a rotating flow of the gas-liquid mixture that occurs in the case member, a part of the gas-liquid mixture that is introduced into the case member is guided by the support rib to form a more smoothly rotating flow.
Moreover, in the case the case member consists of a cylindrical part at an upper side and a tapered part at a lower side that is continuous with the cylindrical part at the upper side, and the tapered part at a lower side extends from a lower end of the cylindrical part at the upper side to a lower end of the case member rib while inclining to the axial center of the exhaust pipe, a rotating flow of the gas-liquid mixture that is introduced into the case member is formed more smoothly.
Additionally, in the case a value of a specified gap L between the exhaust member and the liquid discharge outlet is more than zero and three times or less of a diameter D1 of the liquid discharge outlet, the flow of the gas-liquid mixture from the liquid discharge outlet toward the exhaust pipe is more reliably obstructed by a facing surface of the obstructing member.
Further, if the gas-liquid mixture is a blow-by gas, the blow-by gas can be appropriately centrifugally separated into a gas and an oil.

### [Brief Description of Drawings]

Figure 1 is a cross-sectional view of a gas-liquid separator in accordance with the present Example.
Figure 2 is a cross-sectional view of the II-II cross section in Figure 1.
Figure 3 is an explanatory drawing of another embodiment of the support rib.
Figure 4 is an explanatory drawing of another embodiment of the obstructing member.
Figure 5 is a cross-sectional view of a main part of a conventional gas-liquid separator.
Figure 6 is a cross-sectional view of the VI-VI line in Figure 5.

### [Description of Reference Numerals and Signs]

1; gas-liquid separator, 2; case member, 3; exhaust member, 4 and 4'; obstructing member, 4a and 4a'; facing surface, 7a; lower end part, 9; liquid discharge outlet (oil discharge outlet), 12; exhaust pipe, 15 and 15'; support rib, G1 and G2; blow-by gas

### [Best Mode for Carrying out the Invention]

### 1. Gas-liquid separator

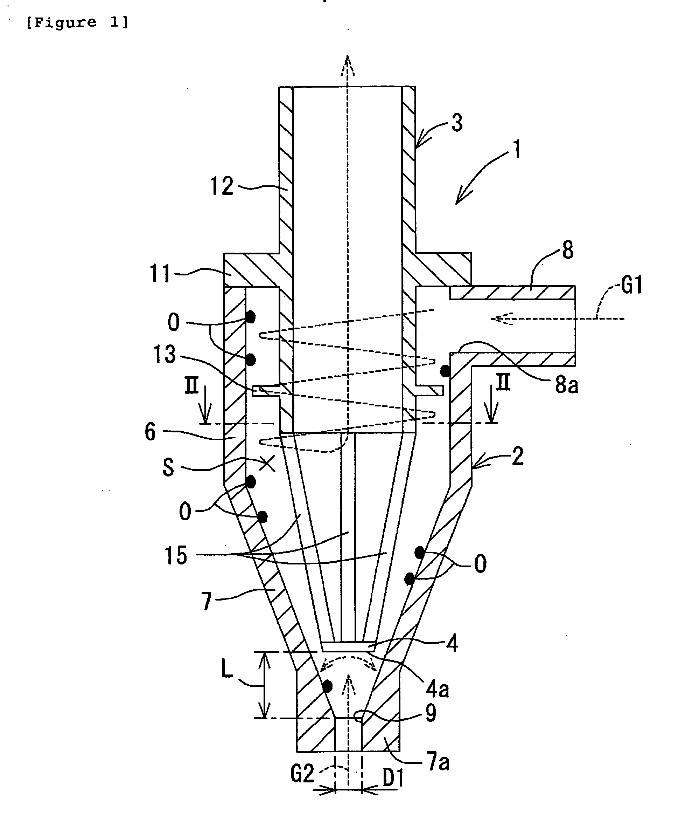

The gas-liquid separator of the present invention is a vertical type that centrifugally separates an introduced gas-liquid mixture into a gas and a liquid. The gas-liquid separator 1 comprises a case member 2, an exhaust member 3 and an obstructing member 4 that are described below. (Refer to Figure 1.)
The use of the gas-liquid separator is not particularly specified, but it is suitable for a device that is installed in a head cover of an internal combustion engine in a vehicle to centrifugally separate a blow-by gas into a gas and an oil. In addition, the expression "vertical type" above means that the gas-liquid separator is disposed vertically around an axial center that is vertically oriented (but that may be slightly inclined relative to a strictly vertical orientation).

The structure, shape, constituent material and the like of the case member are not particularly specified, so long as a liquid discharge outlet is formed at a lower end and is in roughly cylindrical.
An introduction inlet can be formed at an upper side of the case member for the purpose of introducing a gas-liquid mixture from a tangential direction. Additionally, the case member can consist of a cylindrical part at an upper side and a tapered part at a lower side that is continuous with the cylindrical part at upper side. Further, the material constituting to the case member may for example be a synthetic resin, a metal and the like.
The position, shape, number and the like of the liquid discharge outlet are not particularly specified. For example, the liquid discharge outlet may be opened at an outer side of the case member, but it is preferable for the liquid discharge outlet to be formed at a bottom of the case member such that it opens vertically (in the axial direction of the case member). This is so that the separated liquid can be discharged efficiently by gravity.

The structure, shape, constituent material and the like of "the exhaust member" are not particularly specified, so long as it is fixed to the upper side of the case member and has an exhaust pipe that extends vertically in the case member.
The exhaust member may have a flange part that closes off an opening part of the case member at the upper end. Additionally, the material constituting to the exhaust member may for example be a synthetic resin, a metal and the like.
A flange part for partitioning may be provided around an outer side of the exhaust pipe to partition a separated space in the case member into upper and lower sides. This flange part may suppress the unseparated gas-liquid mixture in the upper side of the separated space from flowing into the exhaust pipe.

The structure, shape, constituent material and the like of "the obstructing member" are not particularly specified, so long as it is connected to the exhaust member with a vertically extending support rib to position in the vicinity of the liquid discharge outlet. The obstructing member leads to a obstructing of a direct flow of the gas-liquid mixture from the liquid discharge outlet toward the exhaust pipe. Generally, the gas-liquid mixture which is obstructed by the obstructing member flows along the inner surface of the case member to centrifugally separate by an upper rotating flow.
The obstructing member may be one which has a surface area larger than the area of the opening in the liquid discharge outlet, and whose entire perimeter is separated from the inner surface of the case member.
The expression "in the vicinity of" above means that the obstructing member faces the liquid discharge outlet 9 by a specified gap L. (Refer to Figure 1.) It is preferable for the value of the specified gap L to be more than zero and three times or less of the diameter D1 of the liquid discharge outlet 9.

Example of the overall shape of the obstructing member includes a flat plate shape, a curved plate shape, a lump shape, an irregular shape and the like. Additionally, the plane view of the obstructing member may be circular, polygonal, irregular and the like. Moreover, a surface (an obstructing face) of the obstructing member facing toward the liquid discharge outlet may for example be a flat surface, a concave surface (a surface to be concave toward an upper side, namely a dome shape for inflow of a gas-liquid mixture) (a curved surface, a conical surface, a pyramidal surface and the like).

The obstructing member may be one which is connected to the exhaust pipe 12 at the lower end with the support rib 15 and is disposed such that it faces the liquid discharge outlet 9 formed at a bottom 7a of the case member 2 by a specific gap L, and has a size such that it covers the liquid discharge outlet 9. (Refer to Figure 1.)

In this case, it is preferable for the support rib and the obstructing member to be arranged from an outline to the axial center of the exhaust pipe. This is so that, in the case of forming the exhaust member by die casting, the exhaust pipe and the obstructing member are used simultaneously to integral-form without requiring a complex die structure or the like.
Further, the obstructing member is preferably disposed in the vicinity of the liquid discharge outlet.

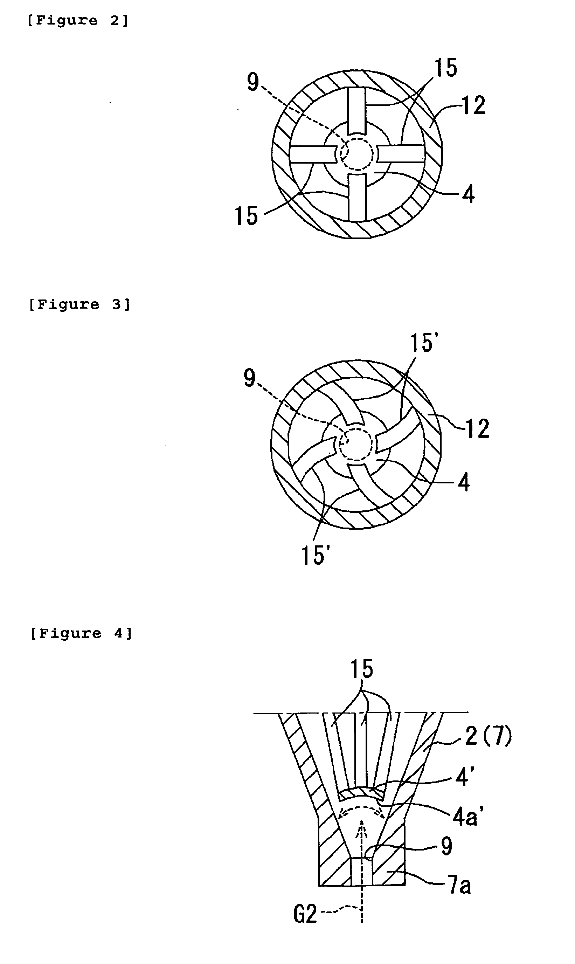

The shape, position, number and the like of the support rib are not particularly specified. The support rib may extend from the lower end of the exhaust pipe to the lower end of the support rib while inclining to the axial center of the exhaust pipe. In this case, the shape of the support rib may for example be one that extends in a roughly straight line in the vertical direction (the axial direction of the case member) (refer to Figure 2), one that extends in a helical shape that is accompanying with the rotating flow which comprises the gas-liquid mixture and occurs in the case member (refer to Figure 3), and the like. Further in the case above, the number of the support rib may be 2-6, desirably 3-5, usually 4 (refer to Figures 2 and 3). Further a taper angle of the support rib is usually smaller than an taper angle of the tapered part at the lower side, when the case member comprises the tapered part at the lower side.
Further, the number of the above support rib may be 2-6 (desirably 3-5, especially desirably 4), and the each support rib may extend from the lower end of the exhaust pipe to the lower end of the support rib while inclining to the axial center of the exhaust pipe, and the shape of the support rib may extend in a helical shape that is accompanying with the rotating flow which comprises the gas-liquid mixture and occurs in the case member, and the lower side of the case member may extend while inclining to the axial center of the case member, and the abovementioned gas-liquid mixture may be a blow-by gas. In this case, the value of the specified gap L between the exhaust member and the liquid discharge outlet may be more than zero and three times or less of the diameter D1 of the liquid discharge outlet.

### [Example]

The present invention will be explained in concrete below with reference to the drawings.
In the example given here, a vertical-type gas-liquid separator that is installed in a head cover of an automobile engine and that centrifugally separates a blow-by gas into a gas and an oil is exemplified.

### (1) Configuration of the gas-liquid separator

The gas-liquid separator 1 according to the present example comprises a case member 2, an exhaust member 3 and an obstructing plate 4 (this is an example of the obstructing member according to the present invention) as shown in Figure 1.

The case member 2 has a cylindrical part 6 at an upper side, and a tapered part 7 which is disposed at a lower side and is continuous with the upper cylindrical part 6, and its overall form is roughly a cylinder that is open at the top. The case member 2 is made of a synthetic resin and is integral-formed by die casting. Additionally, an introduction pipe 8 is provided on an upper and outer side of the cylindrical part 6 to introduce a blow-by gas G1 from a tangential direction. Further, an oil discharge outlet 9 (this is an example of the liquid discharge outlet according to the present invention), which has a roughly circular shape and is open in the vertical direction, is formed at the center of the lower end part 7a of the tapered part 7.

The exhaust member 3 has a flange part 11 which closes off an opening part of the case member 2 at the upper end, and a roughly cylindrical exhaust pipe 12 which passes vertically through the flange part 11. The exhaust member 3 is made of a synthetic resin and is integral-formed by die casting simultaneously with the obstructing plate which is described below. Additionally, a flange part 13 for partitioning is provided around the outer side of the exhaust pipe 12 to partition a separated space S in the case member 2 into upper and lower sides.
The upper side of the case member 2 and the flange part 11 of the exhaust member 3 are fixed by an appropriate fixing mean such as welding, using an adhesive, a bolt or the like.

The obstructing plate 4, as shown in Figures 1 and 2, is connected to the lower end face of the exhaust pipe 12 with a plurality of support ribs 15 (four ribs in the drawings) which extend vertically. The obstructing plate 4 is a disc that extends horizontally, and it is arranged such that it faces the oil discharge outlet 9 by a specific gap L.

In the above-mentioned example, an embodiment wherein the support ribs 15 extend in roughly straight lines inclining from the lower end face to the axial center of the exhaust pipe 12 is exemplified. An embodiment according to the present invention is not limited to the above-mentioned configuration. The support ribs 15' may extend in a helical shape that is accompanying with the rotating flow that comprises the blow-by gas G1 and occurs in the case member 2 as shown in Figure 3. This allows a part of the blow-by gas G1 introduced into the case member 2 to be guided by the support ribs 15' so that a rotating flow may be smoothly formed.

### (2) Function of the gas-liquid separator

Subsequently, the function of the gas-liquid separator 1 will be explained.
The blow-by gas G1 that leaks from the combustion chamber is introduced into the case member 2 from a tangential direction through an introduction inlet 8a of the introduction pipe 8, as shown in Figure 1. After that, the introduced blow-by gas G1 forms a ratating flow in the case member 2 to centrifugally separate into a gas and an oil (oil mist). The separated oil O flows of its own weight downward along the inner surface of the case member 2 to discharge to the outside from the oil discharge outlet 9, while the separated gas is exhausted to the outside from the exhaust pipe 12.

The blow-by gas is sometimes drawn in from both the introduction inlet 8a and the oil discharge outlet 9 during being drawn in. In this case, the flow toward the exhaust pipe 12 of a blow-by gas G2 that is from the oil discharge outlet 9 is obstructed by a facing surface 4a of the obstructing plate 4. And a part of the blow-by gas G2 flows toward the inner surface of the case member 2 to centrifugally separate by an upper rotating flow.

### (3) Effects of the example

Since the gas-liquid separator 1 in this example comprises the obstructing plate 4 which is connected to the lower end of the exhaust pipe 12 by a plurality of the support ribs 15 while facing and covering the oil discharge outlet 9, the flow of the blow-by gas G2 from the oil discharge outlet 9 toward the exhaust pipe 9 may be obstructed by this obstructing plate 4 to inhibit the direct drawing of the blow-by gas G2 into the exhaust pipe 12. Thereby the separation efficiency can be improved. Additionally, since a gap that is sufficiently wide and is uniform in the circumferential direction is formed between an outer peripheral surface of the obstructing plate 4 and an inside surface of the case member 2, the separated oil O can be smoothly discharged from the oil discharge outlet 9 via the gap. Moreover, in the case of forming the exhaust member 3 by die casting, the exhaust member 3 and the obstructing plate 4 are used simultaneously to integral-form without requiring a complex die structure or the like, being superior in machinability.

The present invention is not limited by the example above, and various modified examples that are within the scope of the claims for the present invention can be presented for purposes and uses. That is to say, the example above shows the embodiment where the obstructing plate 4 is disc-shaped and the obstructing face 4a is flat, however, the present invention is not limited by this example. For example, a dome-shaped obstructing plate 4' having a concave surface 4a' (a curved surface, a conical surface, a pyramidal surface and the like) as shown in Figure 4 may also be used. The concave surface 4a' leads to a flow of the blow-by gas G2 downward along the inner surface of the case member 2 and the blow-by gas G2 may be efficiently separate centrifugally by an upper rotating flow.

Further, the example above also shows the embodiment where the support ribs 15 are shaped such that each of the support ribs 15 extends from the lower end of the exhaust pipe to the lower end of the support rib while inclining to the axial center of the exhaust pipe, however, the present invention is not limited by this example. The support rib may be one consisting of a rib part that extends toward the center of the exhaust pipe 12 and a rib part that extends toward the axial center of the exhaust pipe 12. Moreover, the example above shows the embodiment where the support ribs 15 are attached to the lower end face of the exhaust pipe 12, however, the present invention is not limited by this example. The support ribs 15 may be attached to an inner surface (or an outer surface) of the exhaust pipe 12 directly, for example as shown in Figures 5 and 6.

### [Industrial Applicability]

The gas-liquid separator of the present invention is widely used for many fields required in centrifugally separating a gas-liquid mixture into a gas and a liquid. In particular, the present gas-liquid separator is suitable for centrifugally separating a blow-by gas from an internal combustion engine into a gas and an oil.
An object of the present invention is to provide an easily machined vertical gas-liquid separator that inhibits an unseparated gas-liquid mixture from liquid discharge outlet from flowing into exhaust pipe and that can discharge the separated liquid smoothly. The present vertical-type gas-liquid separator 1 is one that centrifugally separates an introduced gas-liquid mixture into gas and liquid and comprises roughly cylindrical case member 2, exhaust member 3 and obstructing member (plate) 4. The liquid discharge outlet (the oil discharge outlet) 9 is formed at a bottom of case member. The exhaust member is provided at an upper side of case member and has an exhaust pipe 12 that extends vertically in the case member. The obstructing member is connected to exhaust member with a vertically extending support rib 15 and is disposed in the vicinity of liquid discharge outlet. A flow of the gas-liquid mixture from the liquid discharge outlet toward the exhaust pipe is obstructed by obstructing member.

## Claims

1. A vertical-type gas-liquid separator for separating a blow-by gas that centrifugally separates an introduced gas-liquid mixture into a gas and a liquid, comprising:
a roughly cylindrical case member (2) in which an introduction inlet (8a), for introducing said gas-liquid mixture from a tangential direction, is formed at an upper side of said case member (2) and a liquid discharge outlet (9), having a roughly circular shape and for discharging a separated liquid, is formed at a lower end (7a),
an exhaust member (3), having a roughly cylindrical shape, for discharging a separated gas, that is provided at an upper side of said case member (2) and that has an exhaust pipe (12) which extends vertically in said case member (2), and
an obstructing member (4), having a circular shape in the plane view and that is connected to said exhaust member (3) with a vertically extending support rib (15),
wherein said case member (2) consists of a cylindrical part (6) at an upper side and a tapered part (7) at a lower side that is continuous with said cylindrical part (6) at said upper side,
wherein said tapered part (7) at a lower side extends from a lower end of said cylindrical part (6) at said upper side to a lower end of said case member (2) while inclining to an axial center of said exhaust pipe (12),
wherein said obstructing member (4) is connected to a lower end of said exhaust pipe (12) with said support rib (15),
wherein said obstructing member (4) is disposed such that it faces said liquid discharge outlet (9) which is formed at a bottom of said case member (2) and is open in the vertical direction,
wherein said obstructing member (4) has a size such that it covers said liquid discharge outlet (9),
wherein said support rib (15) positions said obstructing member (4) in the vicinity of said liquid discharge outlet (9) and,
wherein a value of a specified gap L between said obstructing member (4) and said liquid discharge outlet (9) is more than zero and three times or less of a diameter D1 of said liquid discharge outlet (9),
**characterized in that**
said obstructing member (4) is a member that obstructs a flow of said gas-liquid mixture from said liquid discharge outlet (9) toward said exhaust pipe (12),
wherein said support rib (15) extends from a lower end of said exhaust pipe (12) to a lower end of said support rib (15) while inclining to an axial center of said exhaust pipe (12),
wherein said gas-liquid mixture is a blow-by gas.

2. The gas-liquid separator for separating a blow-by gas according to claim 1,
wherein a face of said obstructing member (4) that faces said liquid discharge outlet (9) is a flat surface of a concave surface.

3. The gas-liquid separator for separating a blow-by gas according to claim 1 or 2,
wherein said support rib (15) has a helical shape that is aligned to a rotating flow of said gas-liquid mixture which occurs in said case member (2).

4. The gas-liquid separator for separating a blow-by gas according to claim 2,
wherein the number of said support rib (15) is 2-6,
wherein said support rib (15) has a helical shape that is aligned to a rotating flow of said gas-liquid mixture which occurs in said case member (2).

5. The gas-liquid separator according to any one of claims 1 to 4,
wherein a flange part (13) for partitioning is provided around an outer side of said exhaust pipe (12) to partition a separated space in the case member (2) into upper and lower sides.

## Patentansprüche

1. Gas-Flüssigkeits-Trenneinrichtung nach vertikaler Art zum Auftrennen eines vorbeiströmenden Gases, die ein eingebrachtes Gas-Flüssigkeits-Gemisch in ein Gas und eine Flüssigkeit auf zentrifugale Art trennt, mit:
einem annähernd zylindrischen Gehäusebauteil (2), in dem ein Einbringeinlass (8a) zum Einbringen des Gas-Flüssigkeits-Gemischs aus einer tangentialen Richtung an einer oberen Seite des Gehäusebauteils (2) ausgebildet ist, und in dem ein Flüssigkeitsabgabeauslass (9), der eine annähernd kreisförmige Gestalt aufweist und zum Abgeben einer abgetrennten Flüssigkeit dient, an einem unteren Ende (7a) ausgebildet ist,
einem Ausströmbauteil (3) mit einer annähernd zylindrischen Gestalt zum Abgeben eines abgetrennten Gases, wobei das Ausströmbauteil (3) an einer oberen Seite des Gehäusebauteils (2) vorgesehen ist und ein Ausströmrohr (12) aufweist, welches sich in dem Gehäusebauteil (2) vertikal erstreckt, und
einem Hindernisbauteil (4), das in der Draufsicht eine kreisförmige Gestalt aufweist und das mit dem Ausströmbauteil (3) durch eine sich vertikal erstreckende Stützrippe (15) verbunden ist,
wobei das Gehäusebauteil (2) aus einem zylindrischen Teil (6) an einer oberen Seite und einem konischen Teil (7) an einer unteren Seite besteht, der sich in den zylindrischen Teil (6) an der oberen Seite fortsetzt,
wobei sich der konische Teil (7) an der unteren Seite von einem unteren Ende des zylindrischen Teils (6) an der oberen Seite zu einem unteren Ende des Gehäusebauteils (2) erstreckt, während er sich bezüglich einer axialen Mitte des Ausströmrohrs (12) neigt,
wobei das Hindernisbauteil (4) durch die Stützrippe (15) mit einem unteren Ende des Ausströmrohrs (12) verbunden ist,
wobei das Hindernisbauteil (4) derart angeordnet ist, dass es dem Flüssigkeitsabgabeauslass (9) zugewandt ist, der an einem Boden des Gehäusebauteils (2) ausgebildet ist und in der vertikalen Richtung offen ist,
wobei das Hindernisbauteil (4) eine derartige Größe aufweist, dass es den Flüssigkeitsabgabeauslass (9) abdeckt,
wobei die Stützrippe (15) das Hindernisbauteil (4) in der Nähe des Flüssigkeitsabgabeauslass (9) positioniert, und
wobei ein Wert eines bestimmten Spalts L zwischen dem Hindernisbauteil (4) und dem Flüssigkeitsabgabeauslass (9) mehr als Null und dreimal oder weniger einen Durchmesser D1 des Flüssigkeitsabgabeauslass (9) ist,
**gekennzeichnet dadurch, dass**
das Hindernisbauteil (4) ein Bauteil ist, das eine Strömung des Gas-Flüssigkeits-Gemischs von dem Flüssigkeitsabgabeauslass (9) in Richtung zu dem Ausströmrohr (12) hin behindert,
wobei sich die Stützrippe (15) von einem unteren Ende des Ausströmrohrs (12) zu einem unteren Ende der Stützrippe (15) erstreckt, während sie sich bezüglich einer axialen Mitte des Ausströmrohrs (12) neigt,
wobei das Gas-Flüssigkeits-Gemisch ein vorbeiströmendes Gas ist.

2. Gas-Flüssigkeits-Trenneinrichtung zum Auftrennen eines vorbeiströmenden Gases nach Anspruch 1,
wobei eine Fläche des Hindernisbauteils (4), die dem Flüssigkeitsabgabeauslass (9) zugewandt ist, eine flache Oberfläche oder eine konkave Oberfläche ist.

3. Gas-Flüssigkeits-Trenneinrichtung zum Auftrennen eines vorüber strömenden Gases nach Anspruch 1 oder 2,
wobei die Stützrippe (15) eine spiralförmige Gestalt aufweist, die mit einer in dem Gehäusebauteil (2) auftretenden Rotationsströmung des Gas-Flüssigkeits-Gemischs ausgerichtet ist.

4. Gas-Flüssigkeits-Trenneinrichtung zum Auftrennen eines vorbeiströmenden Gases nach Anspruch 2,
wobei die Anzahl der Stützrippe (15) zwei bis sechs ist,
wobei die Stützrippe (15) eine spiralförmige Gestalt aufweist, die mit einer in dem Gehäusebauteil (2) auftretenden Rotationsströmung des Gas-Flüssigkeits-Gemischs ausgerichtet ist.

5. Gas-Flüssigkeits-Trenneinrichtung nach einem der Ansprüche 1 bis 4,
wobei ein zum Teilen dienendes Flanschteil (13) um eine Außenseite des Ausströmrohrs (12) herum vorgesehen ist, um einen separaten Raum in dem Gehäusebauteil (2) in eine obere und untere Seite zu teilen.

## Revendications

1. Séparateur gaz/liquide du type vertical destiné à séparer un gaz de fuite qui sépare de manière centrifuge un mélange gaz/liquide introduit en un gaz et un liquide, comprenant:
un organe de carter (2) approximativement cylindrique dans lequel une entrée d'introduction (8a), pour introduire ledit mélange gaz/liquide depuis une direction tangente, est formée à un côté supérieur dudit organe de carter (2) et une sortie (9) de décharge de liquide, ayant un forme approximativement circulaire et destinée à décharger un liquide séparé, est formée au niveau d'une extrémité inférieure (7a),
un organe d'échappement (3), ayant une forme approximativement cylindrique, pour décharger un gaz séparé qui est fourni à un côté supérieur dudit organe de carter (2) et qui a un tuyau d'échappement (12) qui s'étend de manière verticale dans ledit organe de carter (2), et
un organe d'obstruction (4), ayant une forme circulaire dans une vue en plan et qui est relié audit organe d'échappement (3) avec une nervure de support (15) s'étendant de manière verticale,
où ledit organe de carter (2) se compose d'une partie cylindrique (6) à un côté supérieur et d'une partie effilée (7) à un côté inférieur qui est continue avec ladite partie cylindrique (6) au niveau dudit côté supérieur,
où ladite partie effilée (7) au côté inférieur s'étend depuis une extrémité inférieure de ladite partie cylindrique (6) audit côté supérieur à une extrémité inférieure dudit organe de carter (2) tout en s'inclinant vers un centre axial dudit tuyau d'échappement (12),
où ledit organe d'obstruction (4) est relié à une extrémité inférieure dudit tuyau d'échappement (12) avec ladite nervure de support (15),
où ledit organe d'obstruction (4) est disposé de sorte à regarder ladite sortie (9) de décharge de liquide qui est formée au fond dudit organe de carter (2) et est ouverte dans la direction verticale,
où ledit organe d'obstruction (4) a une taille qui lui permet de couvrir ladite sortie (9) de décharge de liquide,
où ladite nervure de support (15) positionne ledit organe d'obstruction (4) à proximité de ladite sortie (9) de décharge de liquide, et
où une valeur d'un jeu spécifié L entre ledit organe d'obstruction (4) et ladite sortie (9) de décharge de liquide est supérieure à zéro et est de trois fois ou moins le diamètre D1 de ladite sortie (9) de décharge de liquide,
**caractérisé en ce que**
ledit organe d'obstruction (4) est un organe qui empêche un flux dudit mélange gaz/liquide provenant de ladite sortie (9) de décharge de liquide d'aller vers ledit tuyau d'échappement (12),
où ladite nervure de support (15) s'étend d'une extrémité inférieure dudit tuyau d'échappement (12) à une extrémité inférieure de ladite nervure de support (15) tout en s'inclinant vers un centre axial dudit tuyau d'échappement (12),
où ledit mélange gaz/liquide est une gaz de fuite.

2. Séparateur de gaz/liquide destiné à séparer un gaz de fuite selon la revendication 1,
où une face dudit organe d'obstruction (4) qui regarde ladite sortie (9) de décharge de liquide est une surface plate d'une surface concave.

3. Séparateur de gaz/liquide destiné à séparer un gaz de fuite selon la revendication 1 ou 2,
où ladite nervure de support (15) a une forme hélicoïdale qui s'aligne avec un flux en rotation dudit mélange gaz/liquide qui se produit dans ledit organe de carter (2).

4. Séparateur de gaz/liquide destiné à séparer un gaz de fuite selon la revendication 2,
où le nombre de ladite nervure de support (15) est de 2 à 6,
où ladite nervure de support (15) a une forme hélicoïdale qui s'aligne avec un flux en rotation dudit mélange e gaz/liquide qui se produit dans ledit organe de carter (2).

5. Séparateur de gaz/liquide selon l'une quelconque des revendications 1 à 4,
où une partie de bride (13) pour la séparation est pourvue autour d'un côté externe dudit tuyau d'échappement (12) pour séparer un espace séparé dans l'organe de carter (2) en des côtés supérieur et inférieur.
